# EUROPEAN PATENT SPECIFICATION

(11) **EP 1 487 038 B1**
(45) Date of publication and mention of the grant of the patent: **12.06.2013**
(21) Application number: 04006130.1
(22) Date of filing: 15.03.2004
(51) Int. Cl.: H01M 4/48, H01M 4/50, H01M 4/52, H01M 4/04, H01M 4/505, H01M 4/525, H01M 4/131, H01M 4/1391

(54) **Positive electrode material, its manufacturing method and lithium batteries**
Positives Elektrodenmaterial, Verfahren zu seiner Herstellung, und Lithium Batterien
Matière d'électrode positive, sa méthode de fabrication et batteries au lithium

(30) Priority: 11.06.2003 JP 2003166685
(43) Date of publication of application: 15.12.2004
(60) Divisional application: 10006263.7
(73) Proprietor: Hitachi, Ltd., Tokyo 100-8280 (JP); HITACHI METALS, LTD., Minato-ku, Tokyo 105-8614 (JP); Shin-Kobe Electric Machinery Co., Ltd., Tokyo 104-0044 (JP)
(72) Inventor: Yuasa, Toyotaka c/o Hitachi, Ltd. Intellectual Property Group, Chiyoda-ku Tokyo 100-8220 (JP); Kasai, Masahiro c/o Hitachi, Ltd. Intellectual Property Group, Chiyoda-ku Tokyo 100-8220 (JP); Nakajima, Genei c/o Hitachi Metals, Ltd., Mishima-gun, Osaka-fu 618-0013 (JP)
(74) Representative: Beetz & Partner

(56) References cited:
- EP-A1- 1 207 572
- EP-A1- 1 296 391
- EP-A1- 1 391 950
- EP-A1- 1 587 156
- EP-A2- 1 220 343
- EP-A2- 1 309 022
- WO-A1-02/086993
- JP-A- 7 245 106
- JP-A- 8 213 015
- JP-A- 2000 243 394
- JP-A- 2001 085 006
- JP-A- 2001 155 729
- JP-A- 2002 042 811

## Description

### FIELD OF THE INVENTION

The present invention relates to a new positive electrode, its manufacturing method and a lithium battery using the positive electrode.

### BACKGROUND OF THE INVENTION

The development of a high-output and high-energy density battery as power source for electric vehicles and hybrid vehicles such as automobiles in which care is given to environment is demanded. Lithium secondary batteries using a non-aqueous electrolyte solution are suitable as batteries for these purposes, because the voltage is high and the energy density is high, and their development is energetically advanced in this field. Besides, for a battery for an automobile, a long life characteristic, stable voltage controllability, resistance to environment, large-sizing and the reduction of the cost are demanded in addition to the characteristics of conventional type batteries for portable electric devices.

For a battery for an automobile, a secure operation in a wide temperature range from low temperatures to high temperatures is demanded. Particularly, as the electric conductivity of lithium ions in an electrolyte solution is reduced at low temperature and the characteristics of the battery are greatly deteriorated, it has been proposed to improve the discharge rate of such lithium batteries.

The form of particles of a lithium-transition metal composite oxide which is the material of the positive electrode, is closely related to the discharge rate. Particularly, as the specific surface of the positive electrode material is related to the area of the solid-liquid interface on which the positive electrode material and the electrolytic solution interact, it has an effect upon the discharge rate. Therefore, JP-A-245106/1995 discloses a lithium secondary battery being excellent in a high discharge rate characteristic by using a positive electrode material having a high specific surface.

Further, JP-A-37576/1995 proposes a positive electrode material provided with a large capacity and being excellent in its charging/discharging efficiency due to secondary particles having such a particle structure that the layer-structure surface of monocrystalline particles of the positive electrode material having a layer crystal structure is exposed outside of the secondary particles.

Besides, in JP-A-85006/2001, a lithium secondary battery is proposed the capacity of which is large and which is made satisfactory in the cycle characteristic by defining voids in the secondary particles of the positive electrode material so as to optimize the particle structure in a lithium-nickel composite oxide.

A secure operation in a wide temperature range from low temperatures to high temperatures is demanded for an automobile battery. When a lithium secondary battery is operated at low temperature, the ionic conductivity of the electrolyte solution is extremely deteriorated. For example, in a conventional type battery, the ionic conductivity at -30 °C of an electrolyte solution including LiPF₆ which is an electrolyte solution in a mixed solvent of ethyl carbonate (EC) and dimethyl carbonate (DMC) is approximately 1/4 of that at room temperature. Therefore, even a lithium secondary battery that provides a sufficient characteristic at room temperature can have only a poor battery characteristic at low temperature.

Besides, as long life is demanded for a battery for an automobile, the maintenance of the cycle characteristic is also essential at the same time as the low-temperature characteristic.

In JP-A-245106/1995, a positive efficiency is achieved to some extent at room temperature, however, in an environment of low temperature, the discharge rate characteristic demanded for an electric vehicle or a hybrid electric vehicle is insufficient. Besides, in the above-mentioned JP-A-37576/1995, the discharge rate characteristic at low temperature is also insufficient with the above-mentioned particle structure. Further, with the positive electrode material disclosed in JP-A-85006/2001 indicated above, as the quantity of Ni included in the transition metal is 50 % or more, the expansion/contraction of the crystal lattice caused by charge/discharge is large. The cycle characteristic is enhanced by increasing the voidage in the secondary particles up to 10 % or more from a value below 10 % so as to reduce the effect of the change in volume of the lattice in the composition. Besides, the density of the positive electrode material is enhanced by setting the voidage to 30 % or less, and the rechargeable capacity is increased. However, the discharge rate at low temperature is insufficient.

### SUMMARY OF THE INVENTION

It is the underlying problem of the invention to provide a positive electrode material, its manufacturing method, positive electrodes for lithium batteries and lithium batteries using the positive electrode material in which the discharge rate characteristic and the battery capacity in a low temperature environment such as of -30 °C are hardly deteriorated and which are excellent in the cycle characteristic.

The above underlying problem is solved according to the independent claim. The dependent claims relate to preferred embodiments.

The present inventors paid attention to the particle structure of the secondary particles in which plural primary particles are combined and arranged in a specific network. It has been found that as the ionic conductivity of the electrolytic solution is deteriorated at low temperature, the conductive network between the primary particles locally decreased because in the secondary particles of the positive electrode material formed by primary particles which were apart from each other, and electrolyte solution filled the voidage between the primary particles, the resistance increased and a voltage drop of the battery occurred.

In accordance with the present invention, a structure is proposed in which the conductive network can be also maintained in an environment of low temperature by increasing the contact area of the primary particles in consideration of the fact that the contact area of the primary particles is important because in an environment of low temperature, not the Li ionic conduction via the electrolyte solution, but the Li ionic diffusion between the primary particles is the dominant factor, and therefore, the ionic conductivity of the electrolyte solution is deteriorated at low temperatures.

According to the invention it was clarified that when 10 % or more of the whole circumferences of the primary particles in an observed substantially central section of a secondary particle are combined by contact with other primary particles, the battery characteristic at a low temperature such as -30 °C is hardly deteriorated.

As voids existing in a secondary particle hold electrolyte solution, the voids are necessary to maintain a discharge rate and a charge capacity at room temperature at which the ionic conductivity of the electrolyte solution is high. Therefore, as voids exist in the secondary particles, the contact between the primary particles is limited as follows. According to the present invention it was found that when a primary particle was in contact with other primary particles and the sum of the lengths of their shared sides was 70 % or less, compared with the periphery of the section of each touched or contacting primary particle, the amount required to maintain the rechargeable capacity of voids existing in a secondary particle was determined. The preferred range is 50 to 70 %. In this case, it is clear that when the Ni content of transition metal in the composition of the positive electrode material according to the invention is below 50 %, the crystal lattice in charge/discharge hardly varies in volume, the primary particles are also hardly distorted in case the contact between them is satisfactory, and the cycle characteristic is excellent.

Besides, in case voids exist to such an extent that the voids cover the circumferences of the primary particles, and the primary particles are apart from the adjacent primary particles, the conductive network in an environment of low temperature is inhibited. Therefore, a minimum of voids must be present in the secondary particles such that the voids do not cover the primary particles, and the cross-sectional area of the voids formed between the primary particles of a secondary particle in a substantially central cross-section of the whole secondary particle is 2.5 to 35 % and preferably 2.5 to 10 %.

If the voidage is 2.5 % or less, the electrolyte solution could not be kept in the voids of the secondary particles, the room-temperature characteristic is deteriorated, and therefore, the voidage for maintaining the rechargeable capacity at room temperature is 2.5 % or more. On the other hand, if the voidage is 35 % or more, the conductive network is inhibited, and the low-temperature characteristic is deteriorated.

To achieve the above-mentioned touch or contact area of the primary particles and the voidage therebetween, the range of the diameters of the primary particles forming the secondary particles is also important. That is, in case the primary particle diameter is smaller than 0.2 µm, the amount of primary particles which can be filled in a spatial volume is limited, the voidage increases and the above-defined range of the voidage of the secondary particles cannot be achieved. On the other hand, in case the primary particle diameter is larger than 10 µm, the diameter of the secondary particles formed by the primary particles exceeds 40 µm, and it is difficult to form the electrode of a lithium secondary battery suited for an electric vehicle or a hybrid electric vehicle.

As Li ions are desorbed or absorbed from/into a Li layer in the positive electrode material having a layered crystal structure, it is advantageous for the diffusion of Li ions that the orientations of the c-axes of the crystals are uniform. Therefore, in the secondary particles in which primary particles are arranged in a network, it is desirable that a network of the primary particles in which the primary particles are in sufficiently contact and the orientation of the c-axes of the crystals is uniform exists. In this case, when the conductivity of the Li ions in the positive electrode material having a two-dimensional layered crystal structure is considered, the greater the number of primary particles with uniform orientations of the c-axes within a secondary particle is, the higher is the probability that the Li ion conductivity of the whole secondary particle is enhanced.

Then, the following method of unifying the orientations of the c-axes of planar crystals by changing the aspect ratio of the crystal particles of the positive electrode material having a layered crystal structure was examined. That is, lithium carbonate was used to function as a flux by adding lithium carbonate in a more than stoichiometric amount in a process for burning the positive electrode material having a layered crystal structure. The orientation of the a-b planes of the crystals was preferentially grown, and 60 % or more of the primary particles in a secondary particle are plate crystals having a layered crystal structure with unified orientations of the c-axes of crystals within a range of 20 degrees (i.e., within ± 10 degrees), and preferably could be unified within a range of 10 degrees (± 5 degree).

There have been produced test batteries with positive electrode materials having a layered crystal structure and which were manufactured with variation of the amount of added lithium carbonate and of the burning temperature. The discharge rate characteristic at low temperature was tested, and the situation of the acquired contact between the primary particles was observed on a section of secondary particles of the positive electrode material having the acquired layered crystal structure, and the relation among the orientations of the c-axes of the primary particles was examined. As a result, it was found that when plural conditions were met, namely that the sum of the contact lengths of the primary particles forming a secondary particle of the positive electrode material having the acquired layered crystal structure in a substantially central cross-section of the secondary particle was in the range of 10 to 70 %, the voidage in that cross-sectional area of the whole secondary particle was 2.5 to 35 % of that cross-sectional area, and 60 % or more of the number of the primary particles had orientations of their c-axes within ± 10 degrees, a high discharge rate characteristic at low temperature was achieved.

The invention further provides a method of manufacturing the positive electrode material by grinding a material powder including Li, Ni, Mn and Co after the material powder was sintered at 950 to 1100 °C, desirably at 1000 to 1050 °C.

It is desirable that the powder composition includes lithium carbonate preferably in more that stoichiometric amount, nickel oxide, manganese dioxide and cobalt oxide and/or that the powder composition is sintered after it is granulated and dried, preferably with a spray dryer.

As described above, the present invention is based on the finding that a layered positive electrode material excellent in the discharge rate at low temperature can be produced by optimizing the structure of the layered positive electrode material and its manufacturing method and controlling the powder characteristics such as the diameter of the primary particles forming the layered positive electrode material, the particle size distribution of the secondary particles which comprise a network body of primary particles and the voidage of the secondary particles as a result of examining the fine particle structures and the low-temperature discharge rates of various layered positive electrode materials. The size of the primary particles and of the secondary particles, the voidage of the secondary particles, the contact between the primary particles and their distribution in the structure of the secondary particles in which the primary particles form a network are all particularly important for the positive electrode material having a layered crystal structure, and the control of the structure of the secondary particles by the particle size of the starting substances, the burning temperature and the reaction time when Li is doped are particularly important.

### BRIEF DESCRTPTION OF THE DRAWINGS

Fig. 1 shows a positive electrode material having a layered crystal structure according to the invention and observed with a scanning electron microscope (SEM);
Fig. 2 is a schematic drawing showing a positive electrode material having the layered crystal structure according to the invention;
Fig. 3 is a diagram showing the relation between voidage and rechargeable capacity at room temperature (25 °C) and at low temperature (-30 °C);
Fig. 4 shows a positive electrode material having a layered crystal structure according to a first comparative example and observed with a scanning electron microscope;
Fig. 5 is a schematic drawing showing the positive electrode material having the layered crystal structure according to the first comparative example;
Fig. 6 shows the distribution of orientations of the c-axes of crystals of primary particles in a secondary particle;
Fig. 7 shows the relation between the relative lattice volume change rate and x in LiNiₓMn_{y}Co_{z}O₂.

### DETAILED DESCRIPTION OF PREFERRED EMBODIMENTS

In the following, the invention will be explained with more details with reference to preferred embodiments and examples and the accompanying drawings. However, the invention is not limited to the following examples.

### Example 1

In this example, for material, manganese dioxide, cobalt oxide, nickel oxide and lithium carbonate are used; they are balanced in the atomic percentages such that the ratio of Ni, Mn and Co is 1:1:1 and the ratio of Li to (NiMnCo) is 1.02:1. Demineralized water is added thereto, and they are ground and mixed in a ball mill using a pot made of resin and a zirconia ball for 20 hours in a wet process. After polyvinylalcohol (PVA) solution is added to the mixed liquid in an amount of 1 % by mass in terms of solid content ratio, the mixed liquid is mixed further for one hour, is granulated and dried by a spray dryer and particles of 5 to 100 µm in size are produced. Next, a crystal having a layered structure is produced by burning these particles at 1000 °C for 3 to 10 hours, which afterward is ground, and a positive electrode material is obtained.

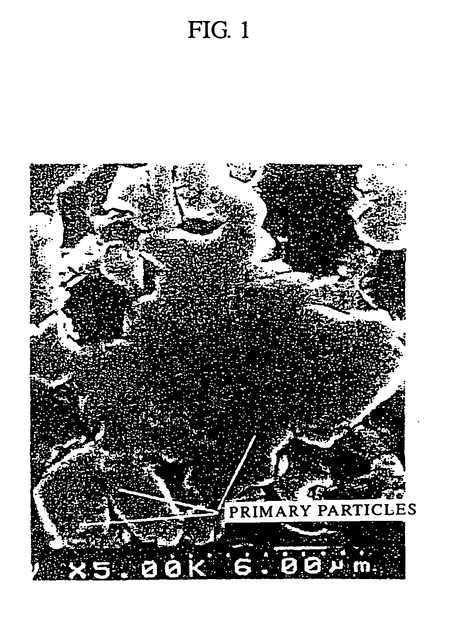

Fig. 1 shows a microphotograph (magnification 5000 times) obtained by scanning electron microscopy and showing a section of the positive electrode material powder according to the present invention.

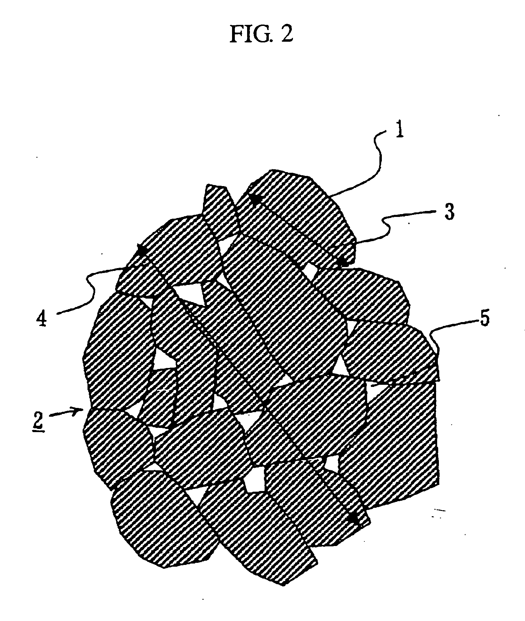

Fig. 2 is a schematic drawing showing a section of a secondary particle of the positive electrode material having a layered crystal structure according to the invention. As for the positive electrode material, primary particles 1 form a network, and thus form the secondary particles 2. Fig. 2 is a schematic drawing serving for an easy understanding of the principle of the present invention and not showing an actual, concrete particle form. Besides, the sectional area of the secondary particle is defined by the area encircled by the outer periphery of the primary particles forming the secondary particle as shown in Fig. 1.

A method of measuring the secondary particle sectional structure in this respect is as follows. A sample obtained by cutting the substantial center of a secondary particle by a focused ion beam or by burying the secondary particle in a resin, cutting and polishing the vicinity of the center is observed at a magnification of 3000 times using an electron microscope, and the diameter of the primary particles, the diameter of the secondary particle and the length of the contact of the primary particles with each other are measured by image processing. At this time, the diameter of each the primary and the secondary particles is defined as the fretted diameter of each longest part. Besides, the sectional area of the secondary particle and the sectional area of the voids 5 are obtained by image processing of an image acquired by electron microscopy. In this case, the sectional area of the secondary particle is the area when the outside periphery of the primary particles forming the unfixed shape of the secondary particle is linked together.

The primary particle diameter 3 is defined as a fretted diameter; the mean particle diameter 3 of the primary particles is 0.2 to 10 µm and the secondary particle diameter 4 is 5 to 30 µm. Besides, the value of the ratio of the sum in length of the shared and mutually linked sides of individual primary particles in the section of the primary particle forming the secondary particle by the outside periphery of the section of the primary particle is calculated. In other words, this ratio is the sum in length of the shared sides with the outside periphery of the primary particle to the total length of the outside periphery of the primary particle. Further, the ratio is calculated for all primary particles in the secondary particle, the mean value is calculated and as a result, the ratio of the shared sides of the primary particles to the outside periphery is 50 to 70 %. A minimum of voids 5 exists in the secondary particle, and the voidage obtained by dividing the area of the voids 5 by the section of the secondary particle is 2.5 to 35 %.

In producing a positive electrode for evaluating the characteristics of the positive electrode material having a layered crystal structure, after positive electrode material having the layered crystal structure, carbonaceous conductive material and a binder are mixed at a ratio of 85:10.7:4.3 in terms of mass percentage, and the uniformly mixed slurry is applied on a 15 µm thick aluminum foil used as current collector; after drying at 110 °C, the coated aluminum foil is pressurized with a pressure of 1.47 kbar (1.5 ton/cm²) by a press, and a dry paint film approximately 40 µm thick is formed. A battery for testing is produced using the positive electrode and a lithium electrode as a counter electrode. As electrolyte solution, a mixed solvent of ethyl carbonate and dimethyl carbonate containing 1.0 M LiPF₆ is used.

Table 1 shows the discharge characteristics and the relation between the voltage and the rechargeable capacity at -30 °C of this battery for testing. After the battery is charged up to 4.2 V under a charging condition of 0.5 C, it is discharged up to 3.0 V at -30 °C and under a discharging condition of 1 C. As shown in Table 1, the voltage and the rechargeable capacity at -30 °C in example 1 both have high values, compared with those of a comparative example 1 described later. Further, the rechargeable capacity at the voltage of 3.5 V in example 1 is also 4.5 mAh/g and excellent.

**Table 1**

| | Rechargeable capacity at low temperature at 3.5 V (mAh/g) | Rechargeable capacity at low temperature at 3.0 V (mAh/g) |
|---|---|---|
| Example 1 | 4.5 | 13 |
| Example 2 | 6 | 9.8 |
| Comparative Example 1 | 2 | 4 |

Besides, positive electrode materials having a layered crystal structure have been produced wherein the contact of the primary particles and the voidage in the secondary particle have been varied by changing the burning conditions of the positive electrode material having the layered crystal structure. In this case, when the burning time is extended, the contact or touch area of the primary particles is increased because the crystal growth further proceeds. Prototype batteries have been produced based upon these materials, and discharge rate tests at room temperature of 25 °C and at the low temperature of -30 °C were made.

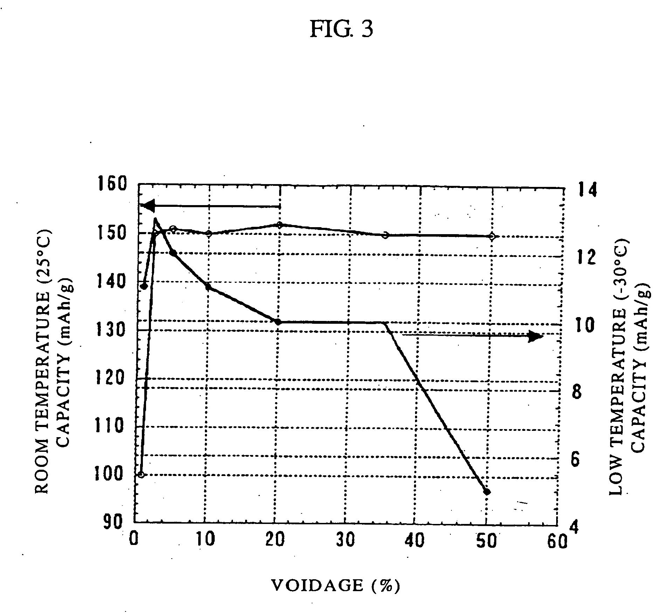

Fig. 3 is a diagram showing the relation between the voidage and the rechargeable capacity. When the voidage is 2.5 % or less, the room-temperature rechargeable capacity is 100 mAh/g and low; on the other hand, when the voidage exceeds 35 %, the rechargeable capacity at the low temperature of -30 °C is rapidly deteriorated. However, when the voidage is in the range of 2.5 to 35 % according to the invention, a high rechargeable capacity of approximately 150 mAh/g at 25 °C and of 10 mAh/g or more at -30 °C is achieved.

### Comparative example 1

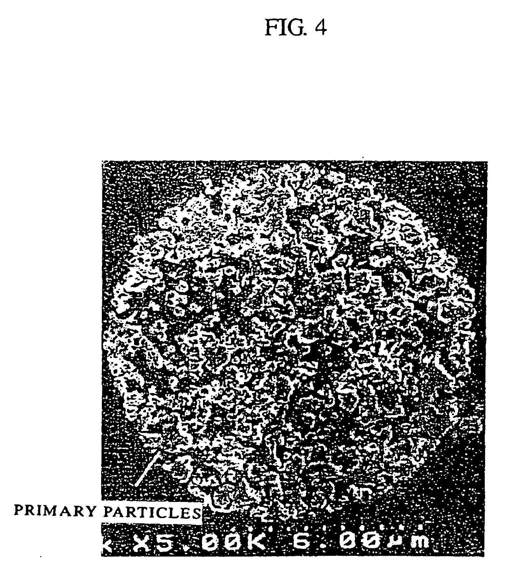

In this comparative example, the positive electrode material having the layered crystal structure described in Example 1 is burnt at 900 °C. Fig. 4 shows a microphotograph (magnification 5000 times) obtained by scanning electron microscopy (SEM) of a section of the positive electrode material having the layered crystal structure.

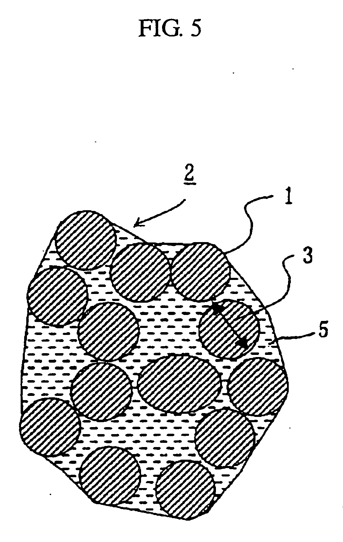

Fig. 5 is a schematic sectional view of a secondary particle thereof. As the burning temperature is low, the crystal growth is insufficient, and there are only a few locations in which primary particles 1 are in contact. Besides, as the crystal growth is insufficient, the diameter 3 of each primary particle forming the secondary particle 2 is also short, and the contact or touch area between the primary particles is small. The result of calculating the ratio of the shared sides of the primary particles to the outside periphery for all of the primary particles in the secondary particle as in Example 1 and calculating the mean value, the ratio is 10 % or less. Besides, as the touch area between the primary particles is small, voids 5 are widely formed. The result of measuring the voidage as in Example 1, the voidage is 41 % or more.

Next, a testing battery has been produced using that positive electrode material having the layered crystal structure in the electrode production process and the testing battery production process respectively, as described in Example 1. As for the characteristics at -30 °C of this testing battery, the discharge rate at low temperature is low as shown in Table 1. As the touch area between the primary particles is small, the low-temperature rate characteristic at -30 °C is deteriorated.

### Comparative example 2

A mixture has been made so that, in atomic percentages, the ratio of Ni to Co was 0.85:0.15 and the ratio of Li to NiCo was 1.02:1. A positive electrode material was produced by a method similar to that of Example 1.

### Example 2

The materials were mixed, and a positive electrode material having the layered crystal structure as described in Example 1 was produced, whereby the ratio of Li to NiMnCo was 1.1:1, and a positive electrode material having a layered crystal structure was obtained. A sample for measurement was produced by cutting substantially the center of a secondary particle of the material by a focused ion beam or by polishing after the secondary particle had been buried in a resin.

The method of measuring the orientation of the primary particles in the sectional structure of the secondary particle at this time is as follows. The sample for measurement is produced by cutting substantially the center of the secondary particle by a focused ion beam or polishing after the secondary particle is buried in resin. Next, the crystal orientation of the sample is determined by electron backscatter diffraction (EBSD). This method is a method of analyzing the crystal orientation by analyzing the Kikuchi lines from back scattering when the electron beam of an electron microscope irradiates each of the primary particles.

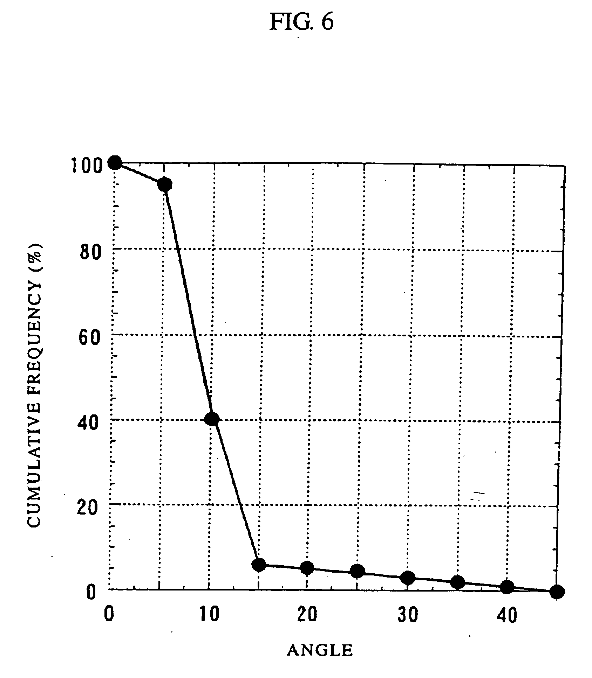

Fig. 6 is a chart showing the relation between the angle representing the orientation of the c-axis of a primary particle in a secondary particle and the cumulative frequency. The angles on the x-axis are the plus and minus values based upon the c-axis. In this embodiment, burning is also tested for various burning conditions. Fig. 6 shows that 60 % of the primary particles are within ± 10 degrees (20 degrees) based upon the orientation of the c-axis. Approximately 5 % of the primary particles are within ± 15 degrees or more based upon the c-axis. Therefore, 95 % or more of the primary particles in the secondary particle are within ± 15 degrees based upon the c-axis, and further, approximately 35 % of the primary particles are within ±15 degrees exceeding ± 10 degrees, approximately 55 % of the primary particles are within ± 10 degrees exceeding ± 5 degrees, and approximately 5 % of the primary particles are within ± 5 degrees.

Next, a battery for testing was produced by the electrode production method and the testing battery production method respectively disclosed in example 1 using the positive electrode material having the layered crystal structure. As for the battery characteristic at -30 °C of this battery for testing, the voltage is 3.5 V as shown in Table 1, the rechargeable capacity is 6 mAh/g, and the battery has an excellent discharge rate at lower temperature still better than that of example 1. As the touch area between the primary particles is great, and the orientations of the c-axes of the primary particles are unified within a small range, the low-temperature rate characteristic at -30 °C is excellent.

### Measuring the change of lattice volume in charge/discharge

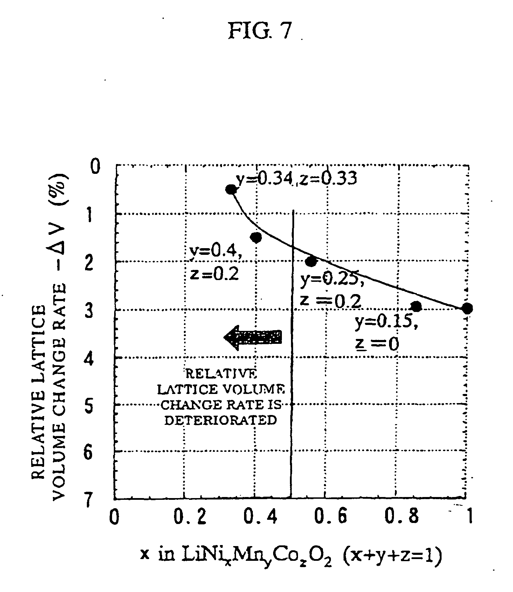

Fig. 7 shows the relation between the relative lattice volume change rate ΔV achieved by producing electrodes with the positive electrode materials described in Example 1 and Comparative example 2 and measuring the lattice constants of the positive electrode materials when they are charged up to 4.2 V and 3.4 V using Xray diffraction for varying x in LiNₓMn_{y}Co_{z}O₂. In this case, the relative lattice volume change rate is the value obtained by dividing the lattice volume in charge up to 4.2 V by the lattice volume in charge up to 3.4 V. When the percentage content of Ni is 50 % or less, the relative lattice volume change rate decreases.

### Charge/discharge cyclic testing

18650-type batteries were produced using the positive electrode materials of Example 1 and of Comparative example 2 for charge/discharge cyclic testing. The production of the batteries was as follows. First, the positive electrode material of Example 1, graphite conductive material, carbon black conductive material and polyvinylidene fluoride (PVDF) are mixed in weight percentages of 80:12:3:5; then, N-methyl-2-pyrrolidone in a suitable amount is added and a slurry is produced. The slurry is agitated 3 h in a planetary mill to mix sufficiently. Next, the slurry is coated on an aluminum foil of 15 µm in thickness using a roller printing-type coater. This compound is pressed with a roller press so that the electrode composite density is 2.5 g/cm³. Further, an electrode is similarly produced on the reverse side of the coated surface. Polyvinylidene fluoride (PVDF) is added to amorphous carbon used as negative electrode in an amount of 6.5 wt.-%. Then the amorphous carbon is agitated for 30 min in a slurry mixer for sufficient mixing. The slurry is then coated on both sides of an electrolytic copper foil of 15 µm in thickness with the coater; after drying it is pressed with the roller press, and the negative electrode is obtained.

The positive electrode and the negative electrode are cut to a predetermined size, and a current collecting tab is installed in an uncoated part of each electrode by ultrasonic welding. After a polyethylene film is cylindrically wound between the positive electrode and the negative electrode, they are inserted into a 18650-type battery can. After the collecting tab and a battery can lid are connected, the battery can lid and the battery can are welded by laser welding, and the battery is sealed.

Next, the electrolyte is injected from an inlet provided to the battery can, and the 18650-type battery is obtained. Charge/discharge cyclic testing is applied to the 18650-type battery, and the cycle characteristic is investigated. The condition of the charge/discharge cyclic testing is that charging is performed at a constant current of 1 mA/cm² and constant voltage up to the charge final voltage of 4.2 V, and discharging is performed at a constant current of 1 mA/cm² up to the discharge final voltage of 3.0 V after a pause of 30 min, and this process is repeated by 500 cycles. At this time, the testing environment temperature is set to 60 °C.

Table 2 shows the capacity retention rate (percentage obtained by dividing the rechargeable capacity in the first cycle by the rechargeable capacity in the 500th cycle) of each testing battery when the positive electrode material described in Example 1 and that of Comparative example 2 are used. As the lattice volume hardly changes in the composition of Example 1, the secondary particles are hardly deteriorated in a charge/discharge cycle, and a satisfactory cycle characteristic where the rechargeable capacity in the 500th cycle is equivalent to 85 % of the rechargeable capacity in the first cycle can be achieved. Further, as the lattice volume greatly changes in the composition of the positive electrode material of Comparative example 2, the rechargeable capacity in the 500th cycle is equivalent to only 40 % of the rechargeable capacity in the first cycle, and the cycle characteristic is inferior.

**Table 2**

| | Percentage content (%) of Ni in transition metal | Voidage (%) of positive electrode material | Capacity retention rate (%) of lithium secondary battery |
|---|---|---|---|
| Example 1 | 33 | 3.6 | 85 |
| Comparative example 2 | 85 | 3.6 | 40 |

As described above, according to the present invention, a positive electrode material and a lithium secondary battery excellent in discharge rate characteristic and battery capacity at low temperature using the positive electrode material having the layered crystal structure improved in its particle structure, its manufacturing method and high-output and high-energy density non-aqueous lithium secondary batteries using the positive electrode material of the invention are provided.

## Claims

1. Positive electrode material, comprising secondary particles (2) composed of a network of crystalline sintered primary particles (1) being in contact with each other, wherein:
- the sum of the contact lengths of the primary particles (1) in a secondary particle (2) in a substantially central cross-section of the secondary particle (2) is 50 to 70 % of the sum of the lengths of the peripheries of the primary particles (1),
- the secondary particles (2) are composed of primary particles (1) which are crystals having a layered structure and comprise Li, Ni, Mn and Co;
- the secondary particles (2) are composed of crystals having a layered structure and have a composition of LiₐNiₓMn_{y}Co_{z}O₂ wherein a, x, y and z meet the following conditions:
- 1 ≤ a ≤ 1.2,
- 0.33 ≤ x ≤ 0.5,
- 0 < y ≤ 0.65,
- 0 < z ≤ 0.65 and
- x+y+z= 1, and
- the mean diameter of the primary particles (1) is 0.2 to 10 µm and/or the mean diameter of the secondary particles (2) is 5 to 30 µm..

2. Electrode material according to claim 1, wherein the crystal orientations of the c-axes of 60 % or more of the primary particles (1) of a secondary particle (2) are within a range of 20 degrees and preferably within a range of 10 degrees.

3. Electrode material according to claim 1 or 2, wherein the cross-sectional area of the voids (5) between the primary particles (1) of a secondary particle (2) in a substantially central cross-section of the secondary particle (2) is 2.5 to 35 % and preferably 2.5 to 10 % of the whole cross-sectional area of the secondary particle (2).

## Patentansprüche

1. Positives Elektrodenmaterial mit sekundären Teilchen (2), die aus einem Netzwerk kristalliner gesinterter primärer Teilchen (1), welche miteinander in Kontakt sind, zusammengesetzt sind, wobei:
- die Summe der Kontaktlängen der primären Teilchen (1) in einem sekundären Teilchen (2) in einem im Wesentlichen mittigen Querschnitt des sekundären Teilchens (2) 50 bis 70% der Summe der Längen der Umfänge der primären Teilchen (1) beträgt,
- die sekundären Teilchen (2) aus primären Teilchen (1) zusammengesetzt sind, welche Kristalle mit einem geschichteten Aufbau sind und Li, Ni, Mn und Co umfassen;
- die sekundären Teilchen (2) aus Kristallen mit einem geschichteten Aufbau zusammengesetzt sind und eine Zusammensetzung von LiₐNiₓMn_{y}Co_{z}O₂ haben, wobei a, x, y und z die folgenden Bedingungen erfüllen:
- 1 ≤ a ≤ 1,2,
- 0,33 ≤ x ≤ 0,5,
- 0 < y ≤ 0,65,
- 0 < z ≤ 0,65 und
- x + y + z = 1, und
- der durchschnittliche Durchmesser der primären Teilchen (1) 0,2 bis 10 µm beträgt und/oder der durchschnittliche Durchmesser der sekundären Teilchen (2) 5 bis 30 µm beträgt.

2. Elektrodenmaterial nach Anspruch 1, wobei die Kristallausrichtungen der c-Achsen von mindestens 60% der primären Teilchen (1) eines sekundären Teilchens (2) in einem Bereich von 20 Grad und bevorzugt in einem Bereich von 10 Grad liegen.

3. Elektrodenmaterial nach Anspruch 1 oder 2, wobei die Querschnittsfläche der Leerräume (5) zwischen den primären Teilchen (1) eines sekundären Teilchens (2) in einem im Wesentlichen mittigen Querschnitt des sekundären Teilchens (2) 2,5 bis 35% und bevorzugt 2,5 bis 10 % der gesamten Querschnittsfläche des sekundären Teilchens (2) beträgt.

## Revendications

1. Matière d'électrode positive, comprenant des particules secondaires (2) composées d'un réseau de particules primaires cristallines frittées (1) en contact les unes avec les autres, dans laquelle :
- la somme des longueurs de contact des particules primaires (1) dans une particule secondaire (2) dans une section transversale sensiblement centrale de la particule secondaire (2) représente entre 50 et 70 % de la somme des longueurs des périphéries des particules primaires (1),
- les particules secondaires (2) sont composées de particules primaires (1) qui sont des cristaux ayant une structure en couches et comprennent du Li, du Ni, du Mn et du Co ;
- les particules secondaires (2) sont composées de cristaux ayant une structure en couches et ont une composition de LiₐNiₓMn_{y}Co_{z}O₂ dans laquelle a, x, y et z remplissent les conditions suivantes :
- 1 ≤ a ≤ 1.2,
- 0,33 ≤ x ≤ 0.5,
- 0 < y ≤ 0.65,
- 0 < z ≤ 0.65, et
- x + y + z = 1, et
- le diamètre moyen des particules primaires (1) est compris entre 0.2 et 10 µm et/ou le diamètre moyen des particules secondaires (2) est compris entre 5 et 30 µm.

2. Matière d'électrode selon la revendication 1, dans laquelle les orientations des axes c des cristaux de 60 % ou plus des particules primaires (1) d'une particule secondaire (2) sont de l'ordre de 20 degrés, et de préférence de l'ordre de 10 degrés.

3. Matière d'électrode selon la revendication 1 ou 2, dans laquelle la surface de section transversale des vides (5) entre les particules primaires (1) d'une particule secondaire (2) dans une section transversale sensiblement centrale de la particule secondaire (2) représente entre 2.5 et 35 %, et de préférence entre 2.5 et 10 %, de la surface de section transversale totale de la particule secondaire (2).
